# EUROPEAN PATENT SPECIFICATION

(11) **EP 3 872 688 B1**
(45) Date of publication and mention of the grant of the patent: **22.04.2026**
(21) Application number: 19874844.4
(22) Date of filing: 09.10.2019
(51) Int. Cl.: G06V 20/58, G06V 10/82, G06V 10/764, G06N 3/08, G06T 7/11, G06T 7/174, G06N 3/045, G06N 3/0464, G06N 3/09

(54) **OBSTACLE IDENTIFICATION METHOD AND DEVICE, STORAGE MEDIUM, AND ELECTRONIC DEVICE**
HINDERNISERKENNUNGSVERFAHREN UND -VORRICHTUNG, SPEICHERMEDIUM UND ELEKTRONISCHE VORRICHTUNG
PROCÉDÉ ET DISPOSITIF D'IDENTIFICATION D'OBSTACLE, SUPPORT DE STOCKAGE, ET DISPOSITIF ÉLECTRONIQUE

(30) Priority: 24.10.2018 CN 201811245582
(43) Date of publication of application: 01.09.2021
(73) Proprietor: Tencent Technology (Shenzhen) Company Limited, Shenzhen, Guangdong, 518057 (CN)
(72) Inventor: CHEN, Ren, Shenzhen, Guangdong 518057 (CN); SUN, Yinjian, Shenzhen, Guangdong 518057 (CN)
(74) Representative: Novagraaf International SA
(86) International application number: PCT/CN2019/110082
(87) International publication number: WO 2020/083024

(56) References cited:
- CN-A- 106 707 293
- CN-A- 108 038 433
- CN-A- 110 147 706
- US-A1- 2017 213 093
- CHEN XIAOZHI ET AL: "Multi-view 3D Object Detection Network for Autonomous Driving", 2017 IEEE CONFERENCE ON COMPUTER VISION AND PATTERN RECOGNITION (CVPR), IEEE COMPUTER SOCIETY, US, 21 July 2017 (2017-07-21), pages 6526 - 6534, XP033250017, ISSN: 1063-6919, [retrieved on 20171106], DOI: 10.1109/CVPR.2017.691
- BO LI ET AL: "Vehicle Detection from 3D Lidar Using Fully Convolutional Network", ARXIV.ORG, CORNELL UNIVERSITY LIBRARY, 201 OLIN LIBRARY CORNELL UNIVERSITY ITHACA, NY 14853, 29 August 2016 (2016-08-29), XP080722375
- WU BICHEN ET AL: "SqueezeSeg: Convolutional Neural Nets with Recurrent CRF for Real-Time Road-Object Segmentation from 3D LiDAR Point Cloud", 2018 IEEE INTERNATIONAL CONFERENCE ON ROBOTICS AND AUTOMATION (ICRA), IEEE, 21 May 2018 (2018-05-21), pages 1887 - 1893, XP033403713, DOI: 10.1109/ICRA.2018.8462926
- ZHAO JIANHUI ET AL: "Object Detection Based on Hierarchical Multi-view Proposal Network for Autonomous Driving", 2018 INTERNATIONAL JOINT CONFERENCE ON NEURAL NETWORKS (IJCNN), IEEE, 8 July 2018 (2018-07-08), pages 1 - 6, XP033419008, DOI: 10.1109/IJCNN.2018.8489196

## Description

### FIELD

This application relates to the field of self-driving, and in particular, to obstacle recognition.

### BACKGROUND

Autonomous vehicles (or self-driving automobiles) are intelligent vehicles that perform unmanned driving through a computer system, which are also referred to as unmanned driven vehicles, computer driven vehicles, or wheeled mobile robots. The autonomous vehicle has been developed for decades in the 20^{th} century and tends to reach a practical level in the early 21^{st} century.

The autonomous vehicle is realized by means of cooperation of the artificial intelligence technology, the visual computing technology, radars, a monitoring device, and a global positioning system, in which a computer is enabled to automatically and safely operate a motor vehicle without any active operation from a human.

X. Chen et al., "Multi-view 3D Object Detection Network for Autonomous Driving" (2017) proposes Multi-View 3D networks (MV3D), a sensory-fusion framework that takes both LIDAR point cloud and RGB images as input and predicts oriented 3D bounding boxes. The network is composed of two subnetworks: one for 3D object proposal generation and another for multi-view feature fusion.

B. Li et al., "Vehicle Detection from 3D Lidar Using Fully Convolutional Network" (2016) proposes to present the data in a 2D point map and use a single 2D end-to-end fully convolutional network to predict the objectness confidence and the bounding boxes simultaneously. By carefully designing the bounding box encoding, it is able to predict full 3D bounding boxes even using a 2D convolutional network.

B. Wu et al., "SqueezeSeg: Convolutional Neural Nets with Recurrent CRF for Real-Time Road-Object Segmentation from 3D LiDAR Point Cloud" (2018) proposes an end-to-end pipeline called SqueezeSeg based on convolutional neural networks (CNN): the CNN takes a transformed LiDAR point cloud as input and directly outputs a point-wise label map, which is then refined by a conditional random field (CRF) implemented as a recurrent layer. Instance-level labels are then obtained by conventional clustering algorithms.

J. Zhao et al., "Object Detection Based on Hierarchical Multi-view Proposal Network for Autonomous Driving" (2018) proposes a hierarchical multi-view proposal network (HMVPN), which can effectively fuse the multi-modal information of the camera with LIDAR. As there are several hierarchical network layers in HMVPN, image becomes the input of the primary network for object detection. Moreover, LIDAR data is divided into four projection images (HBV, IBV, HCV, DCV), and then combines its original 3D point cloud into hierarchical second network to generate candidate proposals using machine learning and heuristic methods.

### SUMMARY

An obstacle recognition method, an obstacle recognition device, a storage medium, and an electronic device are provided according to embodiments of this application, to solve at least the technical problem of a low accuracy of obstacle recognition in the conventional technology.

According to an aspect of the embodiments of this application, an obstacle recognition method is provided, including: acquiring point cloud data during self-driving of a target vehicle, the point cloud data being obtained by scanning a traveling environment of the target vehicle by a sensor in the target vehicle; converting the point cloud data into a first image for showing the traveling environment; and recognizing, from the first image, a first object in the traveling environment through a first neural network model.

According to another aspect of the embodiments of this application, a storage medium is further provided. The storage medium includes a program stored therein, the program, when being run, performs the above method.

According to another aspect of the embodiments of this application, an electronic device is further provided, including a memory, a processor, and a computer program that is stored in the memory and executable on the processor, the processor is configured to perform the above method by the computer program.

According to another aspect of the embodiments of this application, a computer program product including instructions is further provided, the computer program product, when being run on a computer, causes the computer to perform the above method.

In the embodiments of this application, during self-driving of a target vehicle, point cloud data is acquired, and the point cloud data is converted into a first image for showing a traveling environment, and then a first object in the traveling environment is recognized from the first image through a first neural network model. Since the neural network model is used for the processing, an obstacle in an image can be recognized based on features of obstacles learned in advance, so that the technical problem of a low accuracy of obstacle recognition in the conventional technology can be solved, thereby improving the accuracy of obstacle recognition.

### BRIEF DESCRIPTION OF THE DRAWINGS

The drawings described herein are used for providing further understanding of this application, and form a part of this application. Exemplary embodiments of this application and descriptions thereof are used for explaining this application, and do not constitute any inappropriate limitation to this application. In the drawings:
FIG. 1 is a schematic diagram of a hardware environment for an obstacle recognition method according to an embodiment of this application.
FIG. 2 is a flowchart of an obstacle recognition method according to an embodiment of this application.
FIG. 3 is a schematic diagram of a front view according to an embodiment of this application.
FIG. 4 is a schematic diagram of a process of obstacle segmentation according to an embodiment of this application.
FIG. 5 is a schematic diagram of a three-dimensional point cloud according to an embodiment of this application.
FIG. 6 is a schematic diagram of a distance view according to an embodiment of this application.
FIG. 7 is a schematic diagram of a height view according to an embodiment of this application.
FIG. 8 is a schematic diagram of an intensity view according to an embodiment of this application.
FIG. 9 is a schematic diagram of a front view according to an embodiment of this application.
FIG. 10 is a schematic diagram of an obstacle segmentation result according to an embodiment of this application.
FIG. 11 is a schematic diagram of a front view according to an embodiment of this application.
FIG. 12 is a schematic diagram of an obstacle recognition device according to an embodiment of this application.
FIG. 13 is structural block diagram of a terminal according to an embodiment of this application.

### DESCRIPTION OF EMBODIMENTS

To make a person skilled in the art better understand solutions of this application, the technical solutions in embodiments of this application are described clearly and completely in the following with reference to the drawings in the embodiments of this application. Apparently, the described embodiments are merely a part rather than all of the embodiments of this application. All other embodiments obtained by those skilled in the art based on the embodiments of this application without creative efforts shall fall within the protection scope of the appended claims.

It is to be noted that, the terms such as "first" and "second" in the specification, the claims and the drawings of this application are intended to distinguish between similar objects, but are not necessarily used for describing a specific sequence or a chronological order. It is to be understood that the terms used in such a way are interchangeable in proper circumstances, so that the embodiments of this application described herein can be implemented in orders other than the order illustrated or described herein. Moreover, the terms "include", "contain" and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

First, some nouns or terms used in the description of the embodiments of this application are applicable to the following explanations:

The autonomous vehicle is an intelligent vehicle that performs unmanned driving through a computer system, which is also referred to as an unmanned driven vehicle, a computer driven vehicle, or a wheeled mobile robot.

A laser radar indicates a radar system that detects features such as a position and a speed of a target by emitting a laser beam. The laser radar emits a sounding signal (a laser beam) to the target, compares a received signal (a target echo) reflected by the target with the emitted sounding signal, and acquires information related to the target through suitable processing, for example, parameters such as a distance, an orientation, a height, a speed, a posture, and even a shape of the target, so as to detect, track, and recognize the target.

A laser point cloud indicates a set of points for reflecting surface characteristics of a target. In a case that a laser beam is emitted to a surface of an object, a reflected laser beam from the object may carry information such as an orientation and a distance. If the laser beam scans in a track, information about reflected laser points can be recorded while scanning. Due to the fine scanning, a large number of laser points can be obtained to form the laser point cloud.

According to an aspect of the embodiments of this application, an obstacle recognition method is provided.

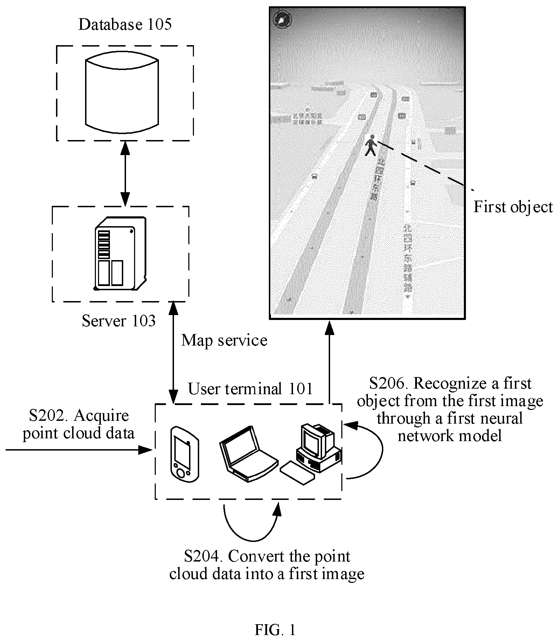

Preferably, in this embodiment, the obstacle recognition method may be applied to a processing device. The processing device may include a terminal and/or a server. For example, as shown in FIG. 1, in the hardware environment including a terminal 101 and/or a server 103, the processing device includes the terminal 101. As shown in FIG. 1, the server 103 is connected to the terminal 101 via a network, and may be configured to provide a service (for example, a game service, an application service, or a map service) for the terminal or a client installed on the terminal. A database 105 may be arranged on the server or independently of the server, to provide a data storage service for the server 103. The network includes, but is not limited to, a wide area network, a metropolitan area network, or a local area network, and the terminal 101 is not limited to an in-vehicle PC, a mobile phone, a tablet computer, and the like.

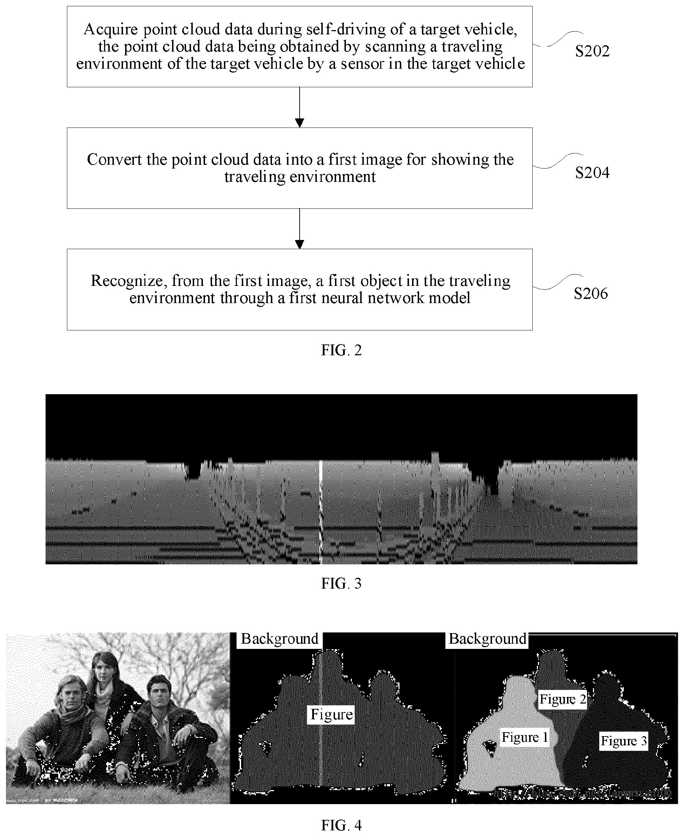

The obstacle recognition method in this embodiment of this application may be performed by the terminal 101. The terminal 101 may perform the obstacle recognition method in this embodiment of this application by a client installed on the terminal 101. FIG. 2 is a flowchart of an obstacle recognition method according to an embodiment of this application. As shown in FIG. 2, the method may include the following steps S202, S204, and S206.

In step S202, a terminal acquires point cloud data during self-driving of a target vehicle. The point cloud data is obtained by scanning a traveling environment of the target vehicle by a sensor in the target vehicle. The sensor herein is capable of acquiring the point cloud data, for example, a radar sensor.

The terminal is an intelligent terminal moving together with the target vehicle. The terminal may be the vehicle itself, or a device integrated in or arranged on the vehicle, such as an in-vehicle PC, a mobile phone, a tablet computer, or an in-vehicle navigation device. The target vehicle may be a vehicle that has a self-driving function, such as a full-autonomous vehicle or a semi-autonomous vehicle.

The point cloud data may be obtained by scanning the traveling environment by using multiple laser beams of a laser radar sensor. A laser radar may obtain features such as a size and a shape of an object with a scanning technology. The laser radar may be provided with a rotating motor having good stability and precision. When a laser beam is emitted onto a polygonal prism driven by the rotating motor, the laser beam is reflected by the polygonal prism to form a scanning beam. Since the polygonal prism is located at a front focal plane of a scanning lens and rotates constantly, an incidence angle of the laser beam changes continually relative to a reflector mirror, such that a reflection angle also changes continually. With the scanning lens, parallel and uninterrupted scanning lines distributed from top to bottom are formed, so as to acquire scanning line data, that is, a point cloud sequence formed through one-time scanning by a single linear laser beam.

The laser radar in this application may be a few-beam laser radar or a multi-beam laser radar. The few-beam laser radar may generate a few scanning lines in one-time scanning. Few-beam products generally include 4-beam products, 8-beam products, which are mainly 2.5D laser radars with a vertical field of view not greater than 10°. The multi-beam laser radar (which is also referred to as a 3D laser radar) may generate multiple scanning lines in one-time scanning. Multi-beam products generally include 16-beam products, 32-beam products, 64-beam products, or the like. A difference between the 3D laser radar and the 2.5D laser radar mainly lies in that the vertical field of view of the 3D laser radar can reach 30° and even above 40°. In this application, a 64-beam laser radar may be used to perform scanning with a 360° horizontal field of view and a 30° vertical field of view.

In step S204, the terminal generates a first image for showing the traveling environment based on the point cloud data.

Since the amount of the point cloud data (the point cloud data includes information such as a distance, an orientation, a height, a speed, a posture, and even a shape of a target) is large, if the point cloud data is directly processed, a large calculation amount and a low efficiency may be caused. In addition, since there is a large difference in terms of contour between a pedestrian and a rider, it is difficult to determine a specific geometric rule for general determination, thus it is difficult to realize high recognition accuracy. In order to improve the data processing efficiency, in this application, the point cloud data is converted into an image, and obstacle recognition is performed in an image recognition manner, reducing consumption of time and hardware for data processing, thus improving the data processing efficiency. In addition, since the neural network model may be used to build a model and extract an unknown feature and relationship, high-accuracy recognition with can be realized by training the neural network model with proper identified pictures, without setting a geometric rule by humans. The recognition is performed without human interruption, such that the severe effect caused by lacking human experience can be avoided.

In step S206, the terminal recognizes, from the first image, a first object in the traveling environment through a first neural network model.

In a possible implementation, the first neural network model is obtained by training a second neural network model with a second image identified with a second object, and the first object and the second object are obstacles of the same type. The same type in this embodiment of this application may indicate the same category. The partition granularity of the type may be determined according to a scenario or a requirement. For example, in one partition granularity, pedestrians may belong to one type, and non-motor vehicles may belong to another type. In another partition granularity, bicycles may belong to one type, and motorbikes may belong to another type.

Because an application scenario of this embodiment of this application is used for object recognition during driving of a vehicle, the first object and the second object may further have a feature of mobility in addition to that the first object and the second object are obstacles of the same type.

For example, an object (for example, the first object and second object) may be a movable obstacle which may affect the driving the target vehicle, such as another vehicle, a person, a bicycle, or an animal.

In this application, the obstacle recognition is performed through the neural network model. By learning images identified with obstacles, the neural network model can automatically determine a mapping relationship between inputted image features and outputted data (whether an object is "an obstacle"), adaptively record the learned content in a weight value of the network, that is, build a mapping relationship between image features and an obstacle, thereby recognizing an obstacle based on the learned mapping relationship.

In the above embodiment, description is made by taking an example in which the obstacle recognition method according to this embodiment of this application is performed by the terminal 101. The obstacle recognition method according to the embodiments of this application may also be performed by the server 103, and the difference of this way from the above embodiment only lies in the execution body. The obstacle recognition method according to the embodiment of this application may also be performed by both the server 103 and the terminal 101, for example, the server 103 performs one or two steps (such as steps S202 to S204), and the terminal performs the other steps (such as step S206).

With the above steps S202 to S206, during self-driving of a target vehicle, point cloud data is acquired, the point cloud data is converted into a first image for showing a traveling environment, and a first object in the traveling environment is recognized from the first image through a first neural network model. The neural network model is used for recognition, since the neural network model may recognize an obstacle in an image based on features of obstacles learned in advance, the technical problem of low accuracy of obstacle recognition in the conventional technology can be solved, thereby improving the accuracy of obstacle recognition.

In the technical solutions of this application, three-dimensional laser point cloud is projected to form a view and a relationship between the three-dimensional laser point cloud and the formed view is established. Based on features of a pedestrian and a rider, the pedestrian and the rider are detected from a front view which has a largest imaging size with an instance segmentation technology in a computer vision field, achieving a good detection effect. In addition, since the front view has a small size, the time period for computation is short, meeting a requirement of real-time on-line perception of self-driving.

The technical solutions of this application may be applied to an advanced driver assistance system (ADAS). The ADAS adopts an active safety technology in which data of environments in and out of a vehicle is acquired first by various sensors mounted on the vehicle and technical processing such as discrimination, detection, and tracking on a static object and a dynamic object are performed to enable a driver to perceive a potential danger as quickly as possible, thereby improving the safety. The sensors used by the ADAS mainly include laser radars and the like. When the vehicle detects a potential danger, that is, an obstacle is detected with the technical solutions of this application, the vehicle may give an alarm to warn the driver to notice an abnormal vehicle or road condition, or directly performs self-driving to avoid the detected obstacle. The technical solutions of this application are further described below in detail with reference to steps shown in FIG. 2.

In S202, during self-driving of the first target vehicle, the terminal acquires the point cloud data, the point cloud data is obtained by scanning the traveling environment of the first target vehicle by the radar sensor in the first target vehicle.

In this application, the radar sensor may be a laser radar sensor, a laser radar range-finder, or the like, for example, a Velodyne laser radar sensor. In a possible implementation, the radar sensor may be a three-dimensional laser radar sensor, for example, an HDL-64E laser radar sensor in the Velodyne laser radar sensors, which is applicable for obstacle detection and navigation for vehicles and marine vessels. The HDL-64E laser radar sensor is strong and durable, has a 360° field of view and a high transmission rate, and is applicable to applications of 3D mobile data acquisition and map drawing. The HDL-64E laser radar sensor has a 360° horizontal field of view and a 26.8° vertical field of view, a frame rate ranging from 5 to 15 Hz, and output rate of 1.3 million pixels per second, such that the HDL-64E laser radar sensor can provide reliable long-distance sensing data. The HDL-64E laser radar sensor has the advantage of one-piece design and uses 64 lasers that are firmly mounted, such that the HDL-64E laser radar sensor is stable and reliable.

In S204, the terminal converts the point cloud data into the first image for showing the traveling environment.

The first image may be a front view of the vehicle. The 64 lasers in the HDL-64E laser radar sensor perform 360° full-scanning around the surrounding environment, all laser points from surrounding objects are projected onto a side surface of a cylinder after the 360° full-scanning, and the side surface is unfolded to form a rectangular surface, so as to form the front view of the laser point cloud, as shown in FIG. 3.

In the above embodiment, the step of converting the point cloud data into a first image for showing the traveling environment may include the following step 1 and step 2.

In step 1, the traveling environment may be considered as a three-dimensional space, a position where the vehicle is located is used as an origin, an axis that passes through the origin and the obstacle is used as an X-axis, an axis that passes through the origin, is perpendicular to the X-axis and is located in the same plane as the X-axis is used as a Y-axis, and an axis that passes through the origin and is perpendicular to the horizontal plane is taken as a Z-axis, and a distance view, a height view, and an intensity view of the traveling environment are determined based on the point cloud data. A pixel value of a pixel point in the distance view is used for indicating a distance between the pixel point and a radar sensor. A pixel value of a pixel point in the height view is used for indicating a height difference between the pixel point and the radar sensor, for example, a difference along the Z-axis. A pixel value of a pixel point in the intensity view is used for indicating a reflection intensity of the pixel point to a laser scan signal of the radar sensor, for example, if an emission intensity is 1, the reflection intensity is generally greater than or equal to 0, and less than or equal to 1, for example, the reflection intensity is 0.5.

Preferably, the distance view, the height view, and the intensity view of the traveling environment may be determined based on the point cloud data in the following way:
determining a cylinder of which the radar sensor is located at the center as a target cylinder;
projecting the point cloud data onto the side surface of the target cylinder;
recording distance information in the point cloud data on the side surface of the target cylinder and performing picture capturing on the side surface of the target cylinder to obtain the distance view of the traveling environment, that is, unfolding the side surface of the target cylinder to obtain the distance view;
recording height information in the point cloud data on the side surface of the target cylinder and performing picture capturing on the side surface of the target cylinder to obtain the height view of the traveling environment, that is, unfolding the side surface of the target cylinder to obtain the height view; and
recording reflection intensity information in the point cloud data on the side surface of the target cylinder and performing picture capturing on the side surface of the target cylinder to obtain the intensity view of the traveling environment, that is, unfolding the side surface of the target cylinder to obtain the intensity view.

In step 2, the distance view, the height view, and the intensity view are combined to form the first image.

Preferably, the step of combining the distance view, the height view, and the intensity view to form the first image may be implemented in the following way: using the pixel value of the pixel point in the distance view as a value of a first channel (for example, an R channel, which is referred to as a red channel) of a pixel point in the first image that is located at the same position as the pixel point in the distance view, using the pixel value of the pixel point in the height view as a value of a second channel (for example, a G channel, which is referred to as a green channel) of a pixel point in the first image that is located at the same position as the pixel point in the height view, and using the pixel value of the pixel point in the intensity view as a value of a third channel (for example, a B channel, or referred to as a blue channel) of a pixel point in the first image that is located at the same position as the pixel point in the intensity view, so as to determine the first image.

In step S206, the terminal recognizes, from the first image, the first object in the traveling environment through the first neural network model. The first neural network model is obtained by training the second neural network model with the second image identified with the second object, and the first object and the second object are movable obstacles.

In this embodiment of this application, the recognizing, from the first image, a first object in the traveling environment through a first neural network model may include the following steps 1 to 3.

In step 1, the value of the first channel in the first image, the value of the second channel in the first image, and the value of the third channel in the first image are used as an input of the first neural network model.

Preferably, the values of the channels of each pixel in the first image may be transformed into a one-dimensional matrix according to a position of the pixel, to facilitate being inputted into the first neural network model, for example, a one-dimensional matrix of [an R value of a pixel point 1, a G value of the pixel point 1, a B value of the pixel point 1, an R value of a pixel point 2, a G value of the pixel point 2, a B value of the pixel point 2, ..., an R value of a pixel point n, a G value of the pixel point n, and a B value of the pixel point n].

Alternatively, pixels in the first image may be transformed into a one-dimensional matrix according to channels, to facilitate being inputted into the first neural network model, for example, a one-dimensional matrix of [an R value of a pixel point 1, an R value of a pixel point 2, ..., an R value of a pixel point n, a G value of the pixel point 1, a G value of the pixel point 2, ..., a G value of the pixel point n, a B value of the pixel point 1, a B value of the pixel point 2, ..., and a B value of the pixel point n].

Alternatively, the first image may be transformed into a grayscale image, such that each pixel has a grayscale, and the grayscale is used as an input of the first neural network model, for example, [a grayscale value of a pixel point 1, a grayscale value of a pixel point 2, ..., and a grayscale value of a pixel point n].

In step 2, object recognition is performed on the traveling environment in the first image through the first neural network model to obtain the first object. The object recognition includes determining, from the traveling environment, the first object having learned features of a movable obstacle.

Preferably, before the recognizing, from the first image, a first object in the traveling environment through a first neural network model, the first neural network model may be trained in the following way: training the second neural network model with the second image in a training set to initialize a weight parameter of each network layer of the second neural network model to obtain a third neural network model; using the third neural network model as the first neural network model in a case that accuracy of recognizing a third object in an image of a test set by the third neural network model is not less than a first threshold (for example, 95%); and continually training the third neural network model with the second image in the training set in a case that the accuracy of recognizing the third object in the picture of the test set by the third neural network model is less than the first threshold, until the accuracy of recognizing the third object in the picture of the test set by the third neural network model is not less than the first threshold.

The above second image used as the training image may include two types, that is, a positive sample identified with an object that is an obstacle, and a negative sample identified with an object that is not an obstacle. By using the two types of samples, the neural network model may be used to distinguish an obstacle.

A neural network includes at least two convolutional layers, that is, a first convolutional layer used for performing semantic segmentation, and a second convolutional layer used for performing instance segmentation. The semantic segmentation can be performed at a pixel level, so as to determine a category for each pixel in the image, that is, to implement pixel-level classification. There are mainly two categories herein, one is an obstacle category, and the other is a non-obstacle category. In semantic segmentation, a specific object of a category represents an instance. In order to perform the instance segmentation, it is required to not only implement pixel-level classification, but also distinguish different instances for each category. For differences between the semantic segmentation and the instance segmentation, reference may be made to FIG. 4.

Taking FIG. 4 as an example, the image on the left is used as an input image, that is, a to-be-recognized image, the image in the middle is an image obtained after performing the semantic segmentation, that is, figures are separated from the background, and the image on the right is an image obtained after performing the instance segmentation, that is, individual figures are respectively recognized and are separated from each other.

In step 3, an output result for representing the first object that is outputted by the first neural network model is acquired.

Preferably, after the recognizing, from the first image, a first object in the traveling environment through a first neural network model, a pixel value of a pixel point in the distance view that is located at the same position as the first object in the first image is used as a separation distance between the first object and the target vehicle, and the target vehicle is controlled based on the separation distance.

The controlling the target vehicle based on the separation distance includes: controlling the target vehicle to avoid the first object, to avoid colliding with a pedestrian, another vehicle, a rider, or the like in a case that the distance is less than a second threshold (for example, 10 meters); and controlling the target vehicle to warn the first object, for example, by a horn, light, or the like, in a case that the distance is not less than the second threshold.

In the technical solutions of this application, with reference to a mechanical structure of a laser radar and features of a pedestrian and a rider, a correspondence between a three-dimensional space and a front view is established, such that detection of the pedestrian and the rider in the three-dimensional space can be performed in the form of the front view. In addition, the pedestrian and the rider are detected with the instance segmentation technology in the computer vision field, efficient and stable detection and perception of a pedestrian and a rider in a traffic scene of self-driving are implemented, which is of great significance to the actual application of self-driving.

In an embodiment, the technical solution of this application is described in detail with reference to a specific implementation.

The laser radar, as a core perception part of self-driving, is less affected by the external environment and may easily adapt to factors such as a light source and weather. Currently, related technologies for performing perception and positioning through the laser radar are key factors of implementing self-driving. It is of great significance to detect and perceive a pedestrian and a rider who are one of main participants in a traffic scene. During perception of the laser radar, detection of the pedestrian, the rider, and the like may be implemented by processing original point cloud data of the laser radar.

In the above solution, during detection of the pedestrian and the rider, the HDL-64E laser radar generates 120,000 pieces of point cloud data after scanning of each frame of data. If a solution of directly processing original point cloud data of the laser radar is adopted, the following problems may be caused. Since there is a large amount of point cloud data, it is difficult to meet a requirement of real-time processing. In addition, since the point cloud data is directly analyzed and related feature calculation is required, the involved algorithm is executed consuming a long period of time, thus it is difficult to implement a real-time application unless a perception region is limited. Further, a cluster object is recognized mainly through feature engineering in which features and corresponding thresholds are artificially set, since there is a large difference in terms of forms between the pedestrian and the rider in the laser point cloud, it is difficult to directly determine effective features and corresponding thresholds to determine the cluster object, making it difficult to improve the effect of the algorithm and to implement application in a self-driving scenario.

There are few solutions for detecting a pedestrian and a rider in a laser point cloud, and an effect thus caused is generally not good. In the above solution, a clustering process is performed on the point cloud in a three-dimensional space, features such as a normal vector, size information (including length, width, height, and scale information), and a density of a specific object are analyzed, and a specific rule is set to perform determination. However, there are few reflective points of the laser point cloud on a small target such as a pedestrian or a rider, and corresponding point cloud information only includes geometric information, if the original point cloud is directly processed, a large computation amount and a low efficiency can be caused. In addition, since there is a large difference in term of forms between the pedestrian and the rider, it is difficult to determine a uniform geometric rule for determination, making it difficult to achieve a good effect with a conventional method.

In order to solve the above problems, a technical solution is further provided according to this application, in which point cloud data of a laser radar is converted into an image for processing, for example, elevation information and reflectance information in the point cloud data are converted into an image for processing.

The reason why the laser point cloud is converted into a view for processing in this application is that images of a pedestrian and rider is small in size with respect to a top view due to their geometric proportions, and an image of an obstacle such as a pedestrian or a rider looks large in size with respect to a front view. Processing is performed based on the front view with the mature computer vision technology, and the processing result indicates that with the above method, the processing is performed quickly and effectively, and a better effect of recognizing and detecting a pedestrian and a rider can be achieved. Description is made with reference to the following step 1 to step 3.

In step 1, a relationship is established between a front view and three-dimensional point cloud.

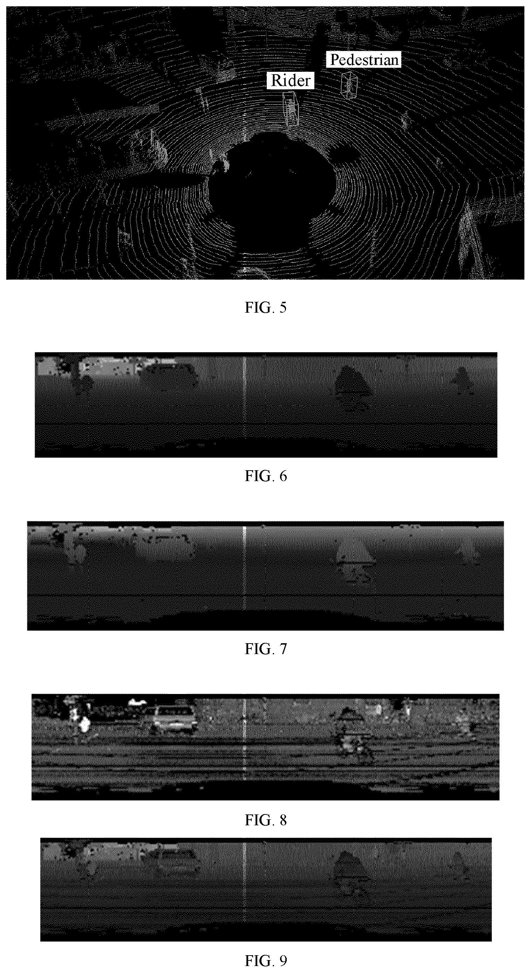

The front view reflects a particular perspective which is selected based on features of hardware of a laser radar. Since images of a pedestrian and a rider has a large area in the front view, and motions of the pedestrian and the rider are relatively slow, considering targets within a range of 40 m around a self-driving vehicle can meet current perception requirements. For a specific three-dimensional point cloud regarding a pedestrian and a rider, reference may be made to FIG. 5.

After the three-dimensional point cloud is acquired, various views from the perspective of the front view may be acquired through projection. According to a scan manner of the three-dimensional point cloud, the point cloud may be projected onto a side surface of a cylinder of which a sensor is located at the central axis, and a partial region of the side surface is captured from an actual perspective to form a view. A distance between a scan point in the point cloud and the sensor is used as a pixel value of a view to obtain a distance view, as shown in FIG. 6. A height of a scan point in the point cloud is used as a pixel value of a view to obtain a height view, as shown in FIG. 7. Reflection intensity of a scan point in the point cloud is used as a pixel value of a view to obtain an intensity view, as shown in FIG. 8.

The three views are combined into a color image in an image channel encoding manner, for example, the three views are used as RGB channels of an image respectively and are superposed and combined to form a color image. Reference may be made to FIG. 9 for details.

In step 2, the front view is segmented.

It is well known that an image is formed by multiple pixels. Semantic segmentation is meant to segment the pixels into different groups according to different semantics in an image. The neural network model in this application uses a fully convolutional network (FCN) to directly perform end-to-end semantic segmentation at a pixel level, which may be implemented based on a mainstream deep convolutional neural network (CNN) model. In the FCN, fully-connected layers fc6 and fc7 are both implemented by convolutional layers, and a final fully-connected layer fc8 is replaced by a 1*1 convolutional layer with M channels, to be used as a final output of the network. The reason why there are M channels is that there are M categories of obstacles.

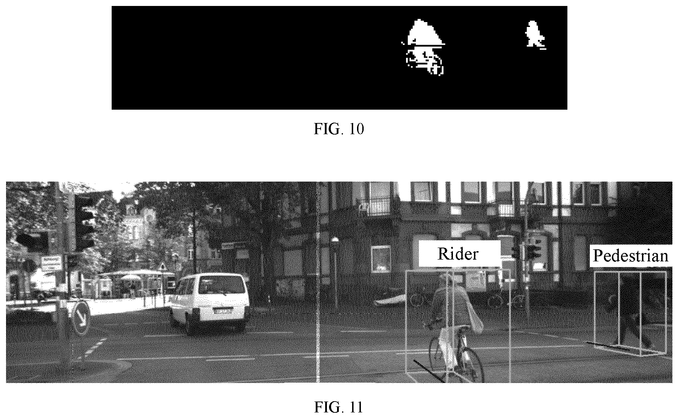

Image segmentation is performed on the front view with a deep learning method by using the above FCN, and an image semantic segmentation model is trained based on the FCN to segment an object of interest from the image. For example, the segmentation result may be as shown in FIG. 10, target objects (for example, a pedestrian and a bicycle) are segmented out.

In step 3, the segmentation result of the front view is projected.

After the front view is segmented, the segmentation result of the front view may be projected onto the three-dimensional point cloud, and then is projected onto a laser image based on the determined relationship with the image. A projection result may be as shown in FIG. 11.

According to the distance information in the distance view of the front view shown in FIG. 9, pixel points of the segmentation result of the front view correspond to scan points in the three-dimensional point cloud. A scan result is re-built in the three-dimensional point cloud and a three-dimensional detection box is drawn. A three-dimensional detection result is projected back onto the image, and the projection result may be as shown in FIG. 11.

By deeply studying a conventional algorithm of converting laser point cloud into an image, with reference to the mechanical structural features of HDL-64E laser radar, and in combination with verification of experiments on laser point cloud processing in practice, the following method is provided in this application. With this method, laser point cloud is converted into a front view, and a pedestrian and a rider are detected in the front view with an instance segmentation algorithm in a computer vision field, realizing perception of a pedestrian and a rider in a traffic scene, which is of great significance to popularization and application of self-driving.

It is to be noted that, for ease of description, the method in the above embodiments are described as a combination of a series of steps. However, those skilled in the art needs to know that this application is not limited to the described sequence of the steps. According to this application, some steps may be performed in another sequence or may be simultaneously performed. In addition, those skilled in the art need to know that, the embodiments described in the specification are exemplary, and the operations and modules thereof are not mandatory to this application.

Through the above description of the embodiments, those skilled in the art may clearly understand that the method according to the above embodiments may be implemented by software and a necessary general hardware platform. Alternatively, the method may also be implemented by hardware. In many cases, the former manner is a better implementation. Based on such an understanding, the technical solutions of this application or the part contributing to the conventional technology may be essentially implemented in a form of a computer software product. The computer software product is stored in a storage medium (for example, a ROM/RAM, a magnetic disk, or an optical disc), and includes several instructions for instructing a terminal device (which may be a mobile phone, a computer, a server, a network device, or the like) to perform the methods according to the embodiments of this application.

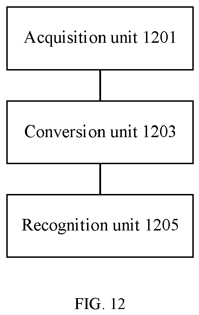

According to another aspect of the embodiments of this application, an obstacle recognition device is further provided, which is configured to perform the obstacle recognition method. FIG. 12 is a schematic diagram of an obstacle recognition device according to an embodiment of this application. As shown in FIG. 12, the device may include: an acquisition unit 1201, a conversion unit 1203, and a recognition unit 1205. The acquisition unit 1201 is configured to acquire point cloud data during self-driving of a target vehicle, the point cloud data is obtained by scanning a traveling environment of the target vehicle by a sensor in the target vehicle. The conversion unit 1203 is configured to convert the point cloud data into a first image for showing the traveling environment. The recognition unit 1205 is configured to recognize, from the first image, a first object in the traveling environment through a first neural network model, the first neural network model is obtained by training a second neural network model with a second image identified with a second object, and the first object and the second object are movable obstacles.

It is to be noted that the acquisition unit 1201 in this embodiment may be configured to perform step S202 in the embodiments of this application, the conversion unit 1203 in this embodiment may be configured to perform step S204 in the embodiments of this application, and the recognition unit 1205 in this embodiment may be configured to perform step S206 in the embodiments of this application.

It is to be noted that the above modules and corresponding steps may be used in the same examples and application scenarios, which are not limited to the content disclosed in the above embodiments. It is to be noted that the above modules may be operated in the hardware environment shown in FIG. 1 as a part of the device, and may be implemented by software, or may be implemented by hardware.

Through the above modules, during self-driving of a target vehicle, point cloud data is acquired, the point cloud data is converted into a first image for showing a traveling environment, and a first object in the traveling environment is recognized from the first image through a first neural network model. The neural network model is used for recognition, since the neural network model may recognize an obstacle in an image based on features of obstacles learned in advance, the technical problem of low accuracy of obstacle recognition in the conventional technology can be solved, thereby improving the accuracy of obstacle recognition.

Preferably, the conversion unit includes a determination module and a combination module. The determination module is configured to determine a distance view, a height view, and an intensity view of the traveling environment based on the point cloud data. A pixel value of a pixel point in the distance view is used for indicating a distance between the pixel point and the sensor, a pixel value of a pixel point in the height view is used for indicating a height difference between the pixel point and the sensor, a pixel value of a pixel point in the intensity view is used for indicating reflection intensity of the pixel point to a scan signal of the sensor. The combination module is configured to combine the distance view, the height view, and the intensity view into the first image.

Preferably, the determination module includes a projection sub-module and a picture capturing sub-module. The projection sub-module is configured to project the point cloud data onto a side surface of a target cylinder. The sensor is located at the center of the target cylinder. The picture capturing sub-module is configured to record distance information in the point cloud data on the side surface of the target cylinder and perform picture capturing on the side surface of the target cylinder to obtain the distance view of the traveling environment; record height information in the point cloud data on the side surface of the target cylinder and perform picture capturing on the side surface of the target cylinder to obtain the height view of the traveling environment; and record reflection intensity information in the point cloud data on the side surface of the target cylinder and perform picture capturing on the side surface of the target cylinder to obtain the intensity view of the traveling environment.

Preferably, the combination module may further be configured to determine the first image by using the pixel value of the pixel point in the distance view as a value of a first channel of a pixel point in the first image that is located at the same position as the pixel point in the distance view, using the pixel value of the pixel point in the height view as a value of a second channel of a pixel point in the first image that is located at the same position as the pixel point in the height view, and using the pixel value of the pixel point in the intensity view as a value of a third channel of a pixel point in the first image that is located at the same position as the pixel point in the intensity view.

Preferably, the recognition unit may include an input module, a recognition module, and an acquisition module. The input module is configured to use the value of the first channel in the first image, the value of the second channel in the first image, and the value of the third channel in the first image as an input of the first neural network model. The recognition module is configured to perform object recognition on the traveling environment in the first image through the first neural network model to obtain the first object. The object recognition includes recognizing, from the traveling environment, the first object having learned features of a movable obstacle. The acquisition module is configured to acquire an output result for representing the first object that is outputted by the first neural network model.

Preferably, the device in this application may further include a training unit. The training unit is configured to perform, before the recognizing, from the first image, the first object in the traveling environment through the first neural network model, the following operations: training the second neural network model with the second image in a training set to initialize a weight parameter of each network layer of the second neural network model to obtain a third neural network model; using the third neural network model as the first neural network model in a case that accuracy of recognizing a third object in an image of a test set by the third neural network model is not less than a first threshold; and continually training the third neural network model with the second image in the training set in a case that the accuracy of recognizing the third object in the image of the test set by the third neural network model is less than the first threshold, until the accuracy of recognizing the third object in the picture of the test set by the third neural network model is not less than the first threshold.

Preferably, the device in this application may further include a distance measuring unit and a control unit. The distance measuring unit is configured to use, after the recognizing, from the first image, the first object in the traveling environment through the first neural network model, a pixel value of a pixel point in the distance view at a same position as the first object in the first image as a separation distance between the first object and the target vehicle. The control unit is configured to control the target vehicle based on the separation distance.

The control unit may include a first control module and a second control module. The first control module is configured to control the target vehicle to avoid the first object in a case that the separation distance is less than a second threshold. The second control module is configured to control the target vehicle to warn the first object in a case that the separation distance is not less than the second threshold.

The laser radar, as a core perception part of self-driving, is less affected by the external environment and may easily adapt to factors such as a light source and weather. Currently, related technologies for performing perception and positioning through the laser radar are key factors of implementing self-driving. It is of great significance to detect and perceive a pedestrian and a rider who are one of main participants in a traffic scene. During perception of the laser radar, detection of the pedestrian, the rider, and the like may be implemented by processing original point cloud data of the laser radar.

In the above solution, during detection of the pedestrian and the rider, the HDL-64E laser radar generates 120,000 pieces of point cloud data after scanning of each frame of data. If a solution of directly processing original point cloud data of the laser radar is adopted, the following problems may be caused. Since there is a large amount of point cloud data, it is difficult to meet a requirement of real-time processing. In addition, since the point cloud data is directly analyzed and related feature calculation is required, the involved algorithm is executed consuming a long period of time, thus it is difficult to implement a real-time application unless a perception region is limited. Further, a cluster object is recognized mainly through feature engineering in which features and corresponding thresholds are artificially set, since there is a large difference in terms of forms between the pedestrian and the rider in the laser point cloud, it is difficult to directly determine effective features and corresponding thresholds to determine the cluster object, making it difficult to improve the effect of the algorithm and to implement application in a self-driving scenario.

There are few solutions for detecting a pedestrian and a rider in a laser point cloud, and an effect thus caused is generally not good. In the above solution, a clustering process is performed on the point cloud in a three-dimensional space, features such as a normal vector, size information (including length, width, height, and scale information), and a density of a specific object are analyzed, and a specific rule is set to perform determination. However, there are few reflective points of the laser point cloud on a small target such as a pedestrian or a rider, and corresponding point cloud information only includes geometric information, if the original point cloud is directly processed, a large computation amount and a low efficiency can be caused. In addition, since there is a large difference in term of forms between the pedestrian and the rider, it is difficult to determine a uniform geometric rule for determination, making it difficult to achieve a good effect with a conventional method.

In order to solve the above problems, a technical solution is further provided according to this application, in which point cloud data of a laser radar is converted into an image for processing, for example, elevation information and reflectance information in the point cloud data are converted into an image for processing.

The reason why the laser point cloud is converted into a view for processing in this application is that images of a pedestrian and rider is small in size with respect to a top view due to their geometric proportions, and an image of an obstacle such as a pedestrian or a rider looks large in size with respect to a front view. Processing is performed based on the front view with the mature computer vision technology, and the processing result indicates that with the above method, the processing is performed quickly and effectively, and a better effect of recognizing and detecting a pedestrian and a rider can be achieved.

It is to be noted that the above modules and corresponding steps may be used in the same examples and application scenarios, which are not limited to the content disclosed in the above embodiments. It is to be noted that the above modules may be operated in the hardware environment shown in FIG. 1 as a part of the device, and may be implemented by software, or may be implemented by hardware. The hardware environment includes a network environment.

According to another aspect of the embodiments of this application, a server or a terminal is further provided, which is configured to perform the above obstacle recognition method.

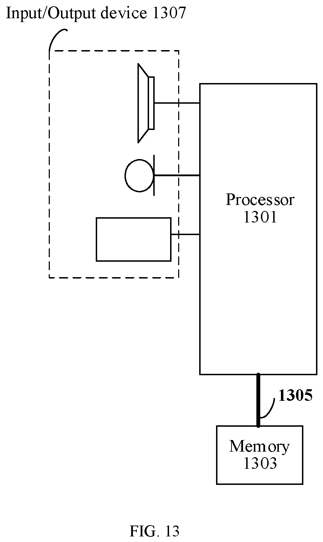

FIG. 13 is a structural block diagram of a terminal according to an embodiment of this application. As shown in FIG. 13, the terminal may include: one or more processors 1301 (FIG. 13 only shows one processor), a memory 1303, and a transmission device 1305. As shown in FIG. 13, the terminal may further include an input/output device 1307.

The memory 1303 may be configured to store a software program and a module, for example, a program instruction/module corresponding to the obstacle recognition method and device in the embodiments of this application. The processor 1301 is configured to perform various functional applications and data processing, that is, to perform the above obstacle recognition method, by running the software program and the module stored in the memory 1303. The memory 1303 may include a high-speed random access memory, and may also include a non-volatile memory, for example, one or more magnetic storage devices, flash memories, or other non-volatile solid state memories. In some examples, the memory 1303 may further include memories remotely arranged relative to the processor 1301, and these remote memories may be connected to the terminal through a network. Examples of the network include but are not limited to, the Internet, an intranet, a local area network, a mobile communication network, and a combination thereof.

The transmission device 1305 is configured to receive or send data through a network, or may further be configured to transmit data between the processor and the memory. Specific examples of the network may include a wired network and a wireless network. In an example, the transmission device 1305 includes a network interface controller (NIC). The NIC may be connected to another network device and a router via a network cable, to communicate with the Internet or the local network. In an example, the transmission device 1305 is a radio frequency (RF) module, which is configured to communicate with the Internet in a wireless manner.

Specifically, the memory 1303 is configured to store an application.

The processor 1301 may invoke, through the transmission device 1305, the application stored in the memory 1303, to perform the following steps:
acquiring point cloud data during self-driving of a target vehicle, the point cloud data being obtained by scanning a traveling environment of the target vehicle by a sensor in the target vehicle;
converting the point cloud data into a first image for showing the traveling environment; and
recognizing, from the first image, a first object in the traveling environment through a first neural network model, the first neural network model being obtained by training a second neural network model with a second image identified with a second object, the first object and the second object being movable obstacles.

The processor 1301 is further configured to perform the following steps:
training the second neural network model with the second image in a training set to initialize a weight parameter of each network layer of the second neural network model to obtain a third neural network model;
using the third neural network model as the first neural network model in a case that accuracy of recognizing a third object in an image of a test set by the third neural network model is not less than a first threshold; and
continually training the third neural network model with the second image in the training set in a case that the accuracy of recognizing the third object in the image of the test set by the third neural network model is less than the first threshold, until the accuracy of recognizing the third object in the picture of the test set by the third neural network model is not less than the first threshold.

In the embodiments of this application, during self-driving of a target vehicle, point cloud data is acquired, the point cloud data is converted into a first image for showing a traveling environment, and a first object in the traveling environment is recognized from the first image through a first neural network model. The neural network model is used for recognition, since the neural network model may recognize an obstacle in an image based on features of obstacles learned in advance, the technical problem of low accuracy of obstacle recognition in the conventional technology can be solved, thereby improving the accuracy of obstacle recognition.

Preferably, for a specific example in this embodiment, refer to the examples described in the above embodiments. Details are not described herein again in this embodiment.

Those skilled in the art may understand that the structure shown in FIG. 13 is merely an example, and the terminal may be a terminal device such as a smartphone (for example, an Android mobile phone or an iOS mobile phone), a tablet computer, a palmtop computer, a mobile Internet device (MID), or a PAD. FIG. 13 does not constitute a limitation on the structure of the electronic device. For example, the terminal may further include more or fewer components (for example, a network interface and a display device) than those shown in FIG. 13, or have a configuration different from that shown in FIG. 13.

Those skilled in the art may understand that all or some of the steps of the methods in the above embodiments may be performed by instructing related hardware of the terminal device via a program. The program may be stored in a computer-readable storage medium. The storage medium may include a flash disk, a read-only memory (ROM), a random access memory (RAM), a magnetic disk, an optical disc, and the like.

A storage medium is further provided according to an embodiment of this application. Preferably, in this embodiment, the storage medium may be configured to store program codes for performing the obstacle recognition method.

Preferably, in this embodiment, the storage medium may be arranged on at least one of network devices in the network described in the above embodiments.

Preferably, in this embodiment, the storage medium is configured to store program codes for performing the following steps S12, S14 and S16.

In step S12, point cloud data is acquired during self-driving of a target vehicle. The point cloud data is obtained by scanning a traveling environment of the target vehicle by a sensor in the target vehicle.

In step S14, the point cloud data is converted into a first image for showing the traveling environment.

In step S16 a first object in the traveling environment is recognized from the first image through a first neural network model. The first neural network model is obtained by training a second neural network model with a second image identified with a second object, the first object and the second object are movable obstacles.

Preferably, the storage medium is further configured to store program codes for performing the following steps S22, S24 and S26.

In step S22, the second neural network model is trained with the second image in a training set to initialize a weight parameter of each network layer of the second neural network model to obtain a third neural network model.

In step S24, the third neural network model is used as the first neural network model in a case that accuracy of recognizing a third object in an image of a test set by the third neural network model is not less than a first threshold.

In step S26, the third neural network model is continually trained with the second image in the training set in a case that the accuracy of recognizing the third object in the image of the test set by the third neural network model is less than the first threshold, until the accuracy of recognizing the third object in the picture of the test set by the third neural network model is not less than the first threshold.

Preferably, for a specific example in this embodiment, reference may be made to the examples described in the above embodiments. Details are not described herein again in this embodiment.

Preferably, in this embodiment, the storage medium may include, but is not limited to, various medium such as a USB flash drive, a ROM, a RAM, a removable hard disk, a magnetic disk, and an optical disc that may store the program codes.

A computer program product including instructions is further provided according to an embodiment of this application. The computer program product, when run on a server, causes the server to perform the method according to the above embodiments.

The sequence numbers of the above embodiments of this application are merely for description purpose but do not indicate the preference of the embodiments.

In a case that the integrated unit in the above embodiments is implemented in the form of a software function unit and sold or used as an independent product, the integrated unit may be stored in the above computer-readable storage medium. Based on such an understanding, the technical solutions of this application, or a part of the technical solutions contributing to the related art, or all or some of the technical solutions may essentially be implemented in a form of a software product. The computer software product is stored in a storage medium and includes several instructions for causing one or more computer devices (which may be a personal computer, a server, a network device, or the like) to perform all or some of the steps of the methods described in the embodiments of this application.

In the above embodiments of this application, the descriptions of the embodiments have their respective focuses. For a part that is not described in detail in an embodiment, reference may be made to related descriptions in other embodiments.

In the embodiments provided in this application, it is to be understood that, the client may be implemented in another manner. The described device embodiments are merely exemplary. For example, the units are divided merely according to logical functions thereof and may be divided in another manner in practice. For example, multiple units or components may be combined or integrated into another system, or some features may be ignored or not performed. In addition, the displayed or discussed coupling, or direct coupling, or communication connection may indicate indirect coupling or communication connection of units or modules by means of some interfaces, and may be in electrical or other forms.

The units described as separate parts may or may not be physically separated from each other, and the parts displayed as units may or may not be physical units, may be located in one position, or may be distributed on multiple network units. Some or all of the units may be selected according to actual requirements to achieve the objectives of the solutions in the embodiments.

In addition, functional units in the embodiments of this application may be integrated into one processing unit, or each of the units can exist alone physically, or two or more units are integrated into one unit. The above integrated unit can be implemented in the form of hardware, or can be implemented in the form of a software function unit.

The above description merely shows exemplary embodiments of this application. Those skilled in the art may make several improvements and refinements without departing from the scope of the appended claims.

## Claims

1. An obstacle recognition method, comprising:
acquiring (S202), by a processing device, point cloud data during self-driving of a target vehicle, the point cloud data being obtained by scanning a traveling environment of the target vehicle by a sensor in the target vehicle, the processing device comprising a terminal and/or a server;
converting (S204), by the processing device, the point cloud data into a first image for showing the traveling environment, wherein the first image is obtained by combining a distance view, a height view, and an intensity view of the traveling environment that are determined based on the point cloud data; and
recognizing (S206), by the processing device from the first image, a first object in the traveling environment through a first neural network model that is trained to receive the first image as input and to provide for the received first image an output result indicative of whether the first object is an obstacle.

2. The method according to claim 1, wherein the converting, by the processing device, the point cloud data into a first image for showing the traveling environment comprises:
determining, by the processing device, the distance view, the height view, and the intensity view of the traveling environment based on the point cloud data, a pixel value of a pixel point in the distance view being used for indicating a distance between the pixel point and the sensor, a pixel value of a pixel point in the height view being used for indicating a height difference between the pixel point and the sensor, a pixel value of a pixel point in the intensity view being used for indicating reflection intensity of the pixel point to a scan signal of the sensor; and
combining, by the processing device, the distance view, the height view, and the intensity view into the first image.

3. The method according to claim 2, wherein the determining, by the processing device, a distance view, a height view, and an intensity view of the traveling environment based on the point cloud data comprises:
projecting, by the processing device, the point cloud data onto a side surface of a target cylinder, the sensor being located at a center of the target cylinder;
recording, by the processing device, distance information in the point cloud data on the side surface of the target cylinder, and performing picture capturing on the side surface of the target cylinder to obtain the distance view of the traveling environment;
recording, by the processing device, height information in the point cloud data on the side surface of the target cylinder, and performing picture capturing on the side surface of the target cylinder to obtain the height view of the traveling environment; and
recording, by the processing device, reflection intensity information in the point cloud data on the side surface of the target cylinder, and performing picture capturing on the side surface of the target cylinder to obtain the intensity view of the traveling environment.

4. The method according to claim 2, wherein the combining, by the processing device, the distance view, the height view, and the intensity view into the first image comprises:
determining, by the processing device, the first image by using the pixel value of the pixel point in the distance view as a value of a first channel of a pixel point in the first image that is located at a same position as the pixel point in the distance view, using the pixel value of the pixel point in the height view as a value of a second channel of a pixel point in the first image that is located at a same position as the pixel point in the height view, and using the pixel value of the pixel point in the intensity view as a value of a third channel of a pixel point in the first image that is located at a same position as the pixel point in the intensity view.

5. The method according to any one of claims 1 to 4, wherein the first neural network model is obtained by training a second neural network model with a second image identified with a second object, the first object and the second object being obstacles of a same type.

6. The method according to claim 5, wherein the recognizing, by the processing device, from the first image, a first object in the traveling environment through a first neural network model comprises:
using, by the processing device, the value of the first channel in the first image, the value of the second channel in the first image, and the value of the third channel in the first image as an input of the first neural network model;
performing, by the processing device, object recognition on the traveling environment in the first image through the first neural network model to obtain the first object, the object recognition comprising recognizing, from the traveling environment, the first object having learned features of an obstacle; and
acquiring, by the processing device, an output result for representing the first object that is outputted by the first neural network model.

7. The method according to claim 5, wherein before the recognizing, by the processing device, from the first image, a first object in the traveling environment through a first neural network model, the method further comprises:
training, by the processing device, the second neural network model with the second image in a training set to initialize a weight parameter of a network layer of the second neural network model to obtain a third neural network model, wherein
in a case that accuracy of recognizing a third object in an image of a test set by the third neural network model is not less than a first threshold, the processing device uses the third neural network model as the first neural network model to recognize the first object in the traveling environment, and
in a case that the accuracy of recognizing the third object in the image of the test set by the third neural network model is less than the first threshold, the processing device continually performs the step of training until the accuracy of recognizing the third object in the picture of the test set by the third neural network model is not less than the first threshold and uses the third neural network model with the accuracy of recognizing the third object in the picture of the test set of not less than the first threshold as the first neural network model to recognize the first object in the traveling environment.

8. The method according to any one of claims 1 to 4, wherein after the recognizing, by the processing device, from the first image, a first object in the traveling environment through a first neural network model, the method further comprises:
using, by the processing device, a pixel value of a pixel point in the distance view at a same position as the first object in the first image as a separation distance between the first object and the target vehicle; and
controlling, by the processing device, the target vehicle based on the separation distance.

9. The method according to claim 8, wherein the controlling, by the processing device, the target vehicle based on the separation distance comprises:
controlling, by the processing device, the target vehicle to avoid the first object in a case that the separation distance is less than a second threshold; and
controlling, by the processing device, the target vehicle to warn the first object in a case that the separation distance is not less than the second threshold.

10. A storage medium, comprising a program stored thereon, wherein the program, when being run, causes the method according to any one of claims 1 to 9 to be performed.

11. An electronic device, comprising a memory (1303), a processor (1301), and a computer program that is stored in the memory (1303) and executable by the processor (1301), wherein the processor (1301) is configured to perform, by executing the computer program, the method according to any one of claims 1 to 9.

12. A computer program product comprising instructions, wherein the instructions, when being run on a computer, cause the computer to perform the method according to any one of claims 1 to 9.

## Patentansprüche

1. Hinderniserkennungsverfahren, das Folgendes umfasst:
Erfassen (S202) von Punktwolkendaten während des Selbstfahrens eines Zielfahrzeugs durch eine Verarbeitungsvorrichtung, wobei die Punktwolkendaten durch Scannen einer Fahrumgebung des Zielfahrzeugs durch einen Sensor im Zielfahrzeug erhalten werden, wobei die Verarbeitungsvorrichtung ein Endgerät und/oder einen Server umfasst;
Umwandeln (S204) der Punktwolkendaten durch die Verarbeitungsvorrichtung in ein erstes Bild, um die Fahrumgebung zu zeigen, wobei das erste Bild durch Kombinieren einer Abstandsansicht, einer Höhenansicht und einer Intensitätsansicht der Fahrumgebung, die auf Basis der Punktwolkendaten bestimmt werden, erhalten werden; und
Erkennen (S206) eines ersten Objekts in der Fahrumgebung durch die Verarbeitungsvorrichtung im ersten Bild durch ein erstes neuronales Netzwerkmodell, das trainiert ist, um das erste Bild als Eingabe zu empfangen und für das empfangene erste Bild ein Ausgabeergebnis bereitzustellen, das anzeigt, ob das erste Objekt ein Hindernis ist.

2. Verfahren nach Anspruch 1, wobei das Umwandeln der Punktwolkendaten durch die Verarbeitungsvorrichtung in ein erstes Bild zum Zeigen der Fahrumgebung Folgendes umfasst:
Bestimmen der Abstandsansicht, der Höhenansicht und der Intensitätsansicht der Fahrumgebung durch die Verarbeitungsvorrichtung auf Basis der Punktwolkendaten, wobei ein Pixelwert eines Pixelpunkts in der Abstandsansicht zum Anzeigen eines Abstands zwischen dem Pixelpunkt und dem Sensor verwendet wird, wobei ein Pixelwert eines Pixelpunkts in der Höhenansicht zum Anzeigen einer Höhendifferenz zwischen dem Pixelpunkt und dem Sensor verwendet wird, wobei ein Pixelwert eines Pixelpunkts in der Intensitätsansicht zum Anzeigen einer Reflexionsintensität des Pixelpunkts zu einem Scansignal des Sensors verwendet wird; und
Kombinieren der Abstandsansicht, der Höhenansicht und der Intensitätsansicht durch die Verarbeitungsvorrichtung zum ersten Bild.

3. Verfahren nach Anspruch 2, wobei das Bestimmen einer Abstandsansicht, einer Höhenansicht und einer Intensitätsansicht der Fahrumgebung durch die Verarbeitungsvorrichtung auf Basis der Punktwolkendaten Folgendes umfasst:
Projizieren der Punktwolkendaten durch die Verarbeitungsvorrichtung auf eine Seitenfläche eines Zielzylinders, wobei sich der Sensor in einer Mitte des Zielzylinders befindet;
Aufzeichnen von Abstandsinformationen in den Punktwolkendaten auf der Seitenfläche des Zielzylinders und Durchführen einer Abbildungserfassung auf der Seitenfläche des Zielzylinders durch die Verarbeitungsvorrichtung, um die Abstandsansicht der Fahrumgebung zu erhalten;
Aufzeichnen von Höheninformationen in den Punktwolkendaten auf der Seitenfläche des Zielzylinders und Durchführen einer Abbildungserfassung auf der Seitenfläche des Zielzylinders durch die Verarbeitungsvorrichtung, um die Höhenansicht der Fahrumgebung zu erhalten; und
Aufzeichnen von Reflexionsintensitätsinformationen in den Punktwolkendaten auf der Seitenfläche des Zielzylinders und Durchführen einer Abbildungserfassung auf der Seitenfläche des Zielzylinders durch die Verarbeitungsvorrichtung, um die Intensitätsansicht der Fahrumgebung zu erhalten.

4. Verfahren nach Anspruch 2, wobei das Kombinieren der Abstandsansicht, der Höhenansicht und der Intensitätsansicht durch die Verarbeitungsvorrichtung zum ersten Bild Folgendes umfasst:
Bestimmen des ersten Bildes durch die Verarbeitungsvorrichtung unter Verwendung des Pixelwertes des Pixelpunkts in der Abstandsansicht als einen Wert eines ersten Kanals eines Pixelpunkts im ersten Bild, der sich in einer selben Position befindet wie der Pixelpunkt in der Abstandsansicht, unter Verwendung des Pixelwertes des Pixelpunkts in der Höhenansicht als einen Wert eines zweiten Kanals eines Pixelpunkts im ersten Bild, der sich in einer selben Position befindet wie der Pixelpunkt in der Höhenansicht, und unter Verwendung des Pixelwertes des Pixelpunkts in der Intensitätsansicht als einen Wert eines dritten Kanals eines Pixelpunkts im ersten Bild, der sich in einer selben Position befindet wie der Pixelpunkt in der Intensitätsansicht.

5. Verfahren nach einem der Ansprüche 1 bis 4, wobei das erste neuronale Netzwerkmodell durch Trainieren eines zweiten neuronalen Netzwerkmodells mit einem zweiten Bild, das mit einem zweiten Objekt identifiziert ist, erhalten wird, wobei das erste Objekt und das zweite Objekt Hindernisse einer selben Art sind.

6. Verfahren nach Anspruch 5, wobei das Erkennen eines ersten Objekts in der Fahrumgebung durch die Verarbeitungsvorrichtung im ersten Bild über ein erstes neuronales Netzwerkmodell Folgendes umfasst:
Verwenden des Wertes des ersten Kanals im ersten Bild, des Wertes des zweiten Kanals im ersten Bild und des Wertes des dritten Kanals im ersten Bild durch die Verarbeitungsvorrichtung als eine Eingabe des ersten neuronalen Netzwerkmodells;
Durchführen einer Objekterkennung durch die Verarbeitungsvorrichtung in der Fahrumgebung im ersten Bild über das erste neuronale Netzwerkmodell, um das erste Objekt zu erhalten, wobei die Objekterkennung das Erkennen des ersten Objekts, das gelernte Merkmale eines Hindernisses aufweist, in der Fahrerumgebung umfasst; und
Erfassen eines Ausgabeergebnisses durch die Verarbeitungsvorrichtung zum Repräsentieren des ersten Objekts, das vom ersten neuronalen Netzwerkmodell ausgegeben wird.

7. Verfahren nach Anspruch 5, wobei das Verfahren vor dem Erkennen eines ersten Objekts in der Fahrumgebung durch die Verarbeitungsvorrichtung im ersten Bild über ein erstes neuronales Netzwerkmodell ferner Folgendes umfasst:
Trainieren des zweiten neuronalen Netzwerkmodells mit dem zweiten Bild in einem Trainingssatz durch die Verarbeitungsvorrichtung, um einen Gewichtungsparameter einer Netzwerkschicht des zweiten neuronalen Netzwerkmodells zu initialisieren, um ein drittes neuronales Netzwerkmodell zu erhalten, wobei
in einem Fall, in dem eine Genauigkeit des Erkennens eines dritten Objekts in einem Bild eines Testsatzes durch das dritte neuronale Netzwerkmodell nicht kleiner ist als ein erster Schwellwert, die Verarbeitungsvorrichtung das dritte neuronale Netzwerkmodell als das erste neuronale Netzwerkmodell verwendet, um das erste Objekt in der Fahrumgebung zu erkennen, und
in einem Fall, in dem die Genauigkeit des Erkennens des dritten Objekts in Bild des Testsatzes durch das dritte neuronale Netzwerkmodell kleiner ist als der erste Schwellwert, die Verarbeitungsvorrichtung den Schritt des Trainierens kontinuierlich durchführt, bis die Genauigkeit des Erkennens des dritten Objekts in der Abbildung des Testssatzes durch das dritte neuronale Netzwerkmodell nicht kleiner ist als der erste Schwellwert, und das dritte neuronale Netzwerkmodell mit der Genauigkeit des Erkennens des dritten Objekts in der Abbildung des Testsatzes von nicht kleiner als der erste Schwellwert als das erste neuronale Netzwerkmodell verwendet, um das erste Objekt in der Fahrumgebung zu erkennen.

8. Verfahren nach einem der Ansprüche 1 bis 4, wobei das Verfahren nach dem Erkennen eines ersten Objekts in der Fahrumgebung durch die Verarbeitungsvorrichtung im ersten Bild über ein erstes neuronales Netzwerkmodell ferner Folgendes umfasst:
Verwenden eines Pixelwertes eines Pixelpunkts in der Abstandsansicht in einer selben Position wie das erste Objekt im ersten Bild durch die Verarbeitungsvorrichtung als einen Trennungsabstand zwischen dem ersten Objekt und dem Zielfahrzeug; und
Steuern des Zielfahrzeugs durch die Verarbeitungsvorrichtung auf Basis des Trennungsabstands.

9. Verfahren nach Anspruch 8, wobei das Steuern des Zielfahrzeugs durch die Verarbeitungsvorrichtung auf Basis des Trennungsabstands Folgendes umfasst:
Steuern des Zielfahrzeugs durch die Verarbeitungsvorrichtung derart, dass es in einem Fall, in dem der Trennungsabstand kleiner ist als ein zweiter Schwellwert, das erste Objekt vermeidet; und
Steuern des Zielfahrzeugs durch die Verarbeitungsvorrichtung derart, dass es in einem Fall, in dem der Trennungsabstand nicht kleiner ist als der zweite Schwellwert, das erste Objekt warnt.

10. Speichermedium, auf dem ein Programm gespeichert ist, wobei das Programm, wenn es läuft, das Durchführen des Verfahrens nach einem der Ansprüche 1 bis 9 veranlasst.

11. Elektronische Vorrichtung, die einen Speicher (1303), einen Prozessor (1301) und ein Computerprogramm umfasst, das im Speicher (1303) gespeichert und vom Prozessor (1301) ausführbar ist, wobei der Prozessor (1301) dazu ausgelegt ist, durch Ausführen des Computerprogramms das Verfahren nach einem der Ansprüche 1 bis 9 durchzuführen.

12. Computerprogrammprodukt, das Anweisungen umfasst, wobei die Anweisungen, wenn sie auf einem Computer laufen, den Computer veranlassen, das Verfahren nach einem der Ansprüche 1 bis 9 durchzuführen.

## Revendications

1. Procédé de reconnaissance d'obstacles, comprenant les étapes suivantes :
acquérir (S202), par un dispositif de traitement, des données de nuage de points pendant une conduite autonome d'un véhicule cible, les données de nuage de points étant obtenues en balayant un environnement de déplacement du véhicule cible par un capteur dans le véhicule cible, le dispositif de traitement comprenant un terminal et/ou un serveur ;
convertir (S204), par le dispositif de traitement, les données de nuage de points en une première image pour montrer l'environnement de déplacement, dans lequel la première image est obtenue en combinant une vue de distance, une vue de hauteur et une vue d'intensité de l'environnement de déplacement qui sont déterminées sur la base des données de nuage de points ; et
reconnaître (S206), par le dispositif de traitement, à partir de la première image, un premier objet dans l'environnement de déplacement par le biais d'un premier modèle de réseau neuronal qui est entraîné pour recevoir la première image en entrée et pour fournir pour la première image reçue un résultat de sortie indiquant si le premier objet est un obstacle.

2. Procédé selon la revendication 1, dans lequel la conversion, par le dispositif de traitement, des données de nuage de points en une première image pour montrer l'environnement de déplacement comprend ce qui suit :
déterminer, par le dispositif de traitement, la vue de distance, la vue de hauteur et la vue d'intensité de l'environnement de déplacement sur la base des données de nuage de points, une valeur de pixel d'un point de pixel dans la vue de distance étant utilisée pour indiquer une distance entre le point de pixel et le capteur, une valeur de pixel d'un point de pixel dans la vue de hauteur étant utilisée pour indiquer une différence de hauteur entre le point de pixel et le capteur, une valeur de pixel d'un point de pixel dans la vue d'intensité étant utilisée pour indiquer une intensité de réflexion du point de pixel vers un signal de balayage du capteur ; et
combiner, par le dispositif de traitement, la vue de distance, la vue de hauteur et la vue d'intensité dans la première image.

3. Procédé selon la revendication 2, dans lequel la détermination, par le dispositif de traitement, d'une vue de distance, d'une vue de hauteur et d'une vue d'intensité de l'environnement de déplacement sur la base des données de nuage de points comprend ce qui suit :
projeter, par le dispositif de traitement, les données de nuage de points sur une surface latérale d'un cylindre cible, le capteur étant situé à un centre du cylindre cible ;
enregistrer, par le dispositif de traitement, des informations de distance dans les données de nuage de points sur la surface latérale du cylindre cible, et effectuer une capture de photo sur la surface latérale du cylindre cible afin d'obtenir la vue de distance de l'environnement de déplacement ;
enregistrer, par le dispositif de traitement, des informations de hauteur dans les données de nuage de points sur la surface latérale du cylindre cible, et effectuer une capture de photo sur la surface latérale du cylindre cible afin d'obtenir la vue de hauteur de l'environnement de déplacement ; et
enregistrer, par le dispositif de traitement, des informations d'intensité de réflexion dans les données de nuage de points sur la surface latérale du cylindre cible, et effectuer une capture de photo sur la surface latérale du cylindre cible afin d'obtenir la vue d'intensité de l'environnement de déplacement.

4. Procédé selon la revendication 2, dans lequel la combinaison, par le dispositif de traitement, de la vue de distance, de la vue de hauteur et de la vue d'intensité dans la première image comprend ce qui suit :
déterminer, par le dispositif de traitement, la première image en utilisant la valeur de pixel du point de pixel dans la vue de distance comme valeur d'un premier canal d'un point de pixel dans la première image qui est situé à une même position que le point de pixel dans la vue de distance, en utilisant la valeur de pixel du point de pixel dans la vue de hauteur comme valeur d'un deuxième canal d'un point de pixel dans la première image qui est situé à une même position que le point de pixel dans la vue de hauteur, et en utilisant la valeur de pixel du point de pixel dans la vue d'intensité comme valeur d'un troisième canal d'un point de pixel dans la première image qui est situé à une même position que le point de pixel dans la vue d'intensité.

5. Procédé selon l'une des revendications 1 à 4, dans lequel le premier modèle de réseau neuronal est obtenu en entraînant un deuxième modèle de réseau neuronal avec une deuxième image identifiée avec un deuxième objet, le premier objet et le deuxième objet étant des obstacles du même type.

6. Procédé selon la revendication 5, dans lequel la reconnaissance, par le dispositif de traitement, à partir de la première image, d'un premier objet dans l'environnement de déplacement par le biais d'un premier modèle de réseau neuronal comprend ce qui suit :
utiliser, par le dispositif de traitement, la valeur du premier canal dans la première image, la valeur du deuxième canal dans la première image et la valeur du troisième canal dans la première image comme entrée du premier modèle de réseau neuronal ;
effectuer, par le dispositif de traitement, une reconnaissance d'objet sur l'environnement de déplacement dans la première image par le biais du premier modèle de réseau neuronal afin d'obtenir le premier objet, la reconnaissance d'objet comprenant la reconnaissance, à partir de l'environnement de déplacement, du premier objet ayant appris les caractéristiques d'un obstacle ; et
acquérir, par le dispositif de traitement, un résultat de sortie pour représenter le premier objet qui est délivré par le premier modèle de réseau neuronal.

7. Procédé selon la revendication 5, dans lequel, avant la reconnaissance, par le dispositif de traitement, à partir de la première image, d'un premier objet dans l'environnement de déplacement par le biais d'un premier modèle de réseau neuronal, le procédé comprend en outre les étapes suivantes :
entraîner, par le dispositif de traitement, le deuxième modèle de réseau neuronal avec la deuxième image dans un ensemble d'entraînement pour initialiser un paramètre de poids d'une couche de réseau du deuxième modèle de réseau neuronal afin d'obtenir un troisième modèle de réseau neuronal, dans lequel
dans le cas où la précision de la reconnaissance d'un troisième objet dans une image d'un ensemble de test par le troisième modèle de réseau neuronal n'est pas inférieure à un premier seuil, le dispositif de traitement utilise le troisième modèle de réseau neuronal comme premier modèle de réseau neuronal pour reconnaître le premier objet dans l'environnement de déplacement, et
dans le cas où la précision de la reconnaissance du troisième objet dans l'image de l'ensemble de test par le troisième modèle de réseau neuronal est inférieure au premier seuil, le dispositif de traitement effectue en continu l'étape d'entraînement jusqu'à ce que la précision de la reconnaissance du troisième objet dans la photo de l'ensemble de test par le troisième modèle de réseau neuronal ne soit plus inférieure au premier seuil et utilise le troisième modèle de réseau neuronal avec la précision de la reconnaissance du troisième objet dans la photo de l'ensemble de test non inférieure au premier seuil comme premier modèle de réseau neuronal pour reconnaître le premier objet dans l'environnement de déplacement.

8. Procédé selon l'une des revendications 1 à 4, dans lequel, après la reconnaissance, par le dispositif de traitement, à partir de la première image, d'un premier objet dans l'environnement de déplacement par le biais d'un premier modèle de réseau neuronal, le procédé comprend en outre les étapes suivantes :
utiliser, par le dispositif de traitement, une valeur de pixel d'un point de pixel dans la vue de distance à une même position que le premier objet dans la première image comme distance de séparation entre le premier objet et le véhicule cible ; et
commander, par le dispositif de traitement, le véhicule cible sur la base de la distance de séparation.

9. Procédé selon la revendication 8, dans lequel la commande, par le dispositif de traitement, du véhicule cible sur la base de la distance de séparation comprend ce qui suit :
commander, par le dispositif de traitement, le véhicule cible pour éviter le premier objet dans le cas où la distance de séparation est inférieure à un deuxième seuil ; et
commander, par le dispositif de traitement, le véhicule cible pour avertir le premier objet dans le cas où la distance de séparation n'est pas inférieure au deuxième seuil.

10. Support de stockage comprenant un programme qui y est stocké, dans lequel le programme, lorsqu'il est exécuté, provoque la mise en œuvre du procédé selon l'une des revendications 1 à 9.

11. Dispositif électronique comprenant une mémoire (1303), un processeur (1301) et un programme informatique qui est stocké dans la mémoire (1303) et exécutable par le processeur (1301), dans lequel le processeur (1301) est configuré pour, en exécutant le programme informatique, mettre en œuvre le procédé selon l'une des revendications 1 à 9.

12. Produit de programme informatique comprenant des instructions, dans lequel les instructions, lorsqu'elles sont exécutées sur un ordinateur, amènent l'ordinateur à mettre en œuvre le procédé selon l'une des revendications 1 à 9.
